# EUROPEAN PATENT SPECIFICATION

(11) **EP 2 160 030 B1**
(45) Date of publication and mention of the grant of the patent: **21.12.2016**
(21) Application number: 08163085.7
(22) Date of filing: 27.08.2008
(51) Int. Cl.: H04N 21/418, H04N 21/4367, H04N 7/167, H04N 21/436, H04N 21/4623

(54) **Multi-vendor conditional access system**
Herstellerneutrales System mit bedingtem Zugang
Système d'accès conditionnel à vendeurs multiples

(43) Date of publication of application: 03.03.2010
(73) Proprietor: Irdeto B.V., 2132 LS Hoofddorp (NL)
(72) Inventor: Van de Ven, Antonius Johannes Petrus Maria, 3111 PG, Schiedam (NL)
(74) Representative: Boult Wade Tennant

(56) References cited:
- EP-A- 0 696 141
- EP-A- 0 935 382
- EP-A- 0 964 573
- EP-A- 0 982 692
- EP-A- 1 638 006
- WO-A-01/06443
- WO-A-01/47267
- US-A1- 2004 228 175
- US-A1- 2008 080 711
- ZA-A- 200 204 489

## Description

### FIELD OF THE INVENTION

The present invention relates to a smartcard for use in a receiver of a conditional access system, a head-end system for use in a conditional access system and a conditional access system. More specifically the invention relates to enabling a multi-vendor conditional access system.

### BACKGROUND

Conditional access systems are well known and widely used in conjunction with currently available pay television systems. At present, such systems are based on the transmission of services encrypted with control words (also referred to as service encryption keys) that are received by subscribers having a set-top box (also referred to as a receiver) and a smartcard for each subscription package. Typically these services are transmitted by a head-end system in a broadcast stream. Implementations are known wherein set-top box functionality is integrated into a device like a television, a personal video recorder, a mobile phone, a smart phone or a computer appliance. A smartcard is typically a separate card that is manually inserted into the set-top box before operation. The smartcard for a subscription package from a particular service provider allows the encrypted services within the package to be decrypted and viewed. The broadcast stream further contains entitlement management messages (EMMs), also referred to as key management messages (KMMs), and entitlement control messages (ECMs), which are necessary for the smartcard to decrypt the service. ECMs are used to carry the control word in encrypted form. EMMs are used to convey the secret keys used to decrypt the ECMs to extract the control word, to decrypt other data related to the addition or removal of viewing/usage rights, and/or to decrypt other user-specific data.

Conditional access systems typically deploy proprietary technology, whereby the smartcard, set-top box and head-end system communicate according to a vendor specific protocol. The implementation of the conditional access system requires a vendor specific firmware installed in the set-top box that can search the broadcast stream for cryptograms addressed to the smartcard. As the addressing methods and cryptogram message formats are vendor specific, the receiver infrastructure - i.e. the set-top boxes in the conditional access system - is suitable for only a single vendor's conditional access system. Thus a set-top box operating according to a vendor 'A' specific technology cannot communicate with a smartcard operating according to a vendor 'B' specific technology or a head-end system operating according to a vendor 'B' specific technology. This is potentially problematic in case of for example broadcaster mergers, conditional access vendor mergers, changes of ownership, large scale security breaches or a broadcaster deciding to stop using a particular vendor specific conditional access system. In these cases the existing receiver infrastructure become useless as it is only compatible with the original conditional access system. Writing off an existing receiver infrastructure can be a significant destruction of capital. Moreover, an end-user can be reluctant to buy a new set-top box.

It is known that new firmware can be uploaded to the receiver infrastructure to allow operation according to another vendor specific technology, but lack of commercial incentives for a receiver manufacturer makes this a non-preferred solution.

Digital Video Broadcasting (DVB) protocols are known to allow an existing receiver infrastructure to operate with a smartcard and head-end system operating according to another vendor specific technology. The SimulCrypt DVB protocol uses multiple set-top boxes, each using a different conditional access system, to authorize broadcasted programs for display. The different ECMs and EMMs required by each conditional access system are transmitted simultaneously. Each set-top box recognizes and uses the appropriate ECM and EMM needed for authorization. The MultiCrypt DVB protocol allows multiple conditional access systems to be used with one set-top box by using a PC card with an embedded smart card for each conditional access system used. Each card is then plugged into a slot in the set-top box. Each card recognizes the ECM and EMM needed for authorization.

EP0964573 discloses a method for enabling DVB-CI functionality by enabling direct access to the Conditional Access Module.

### SUMMARY OF THE INVENTION

It is an object of the invention to provide an improved conditional access system wherein it is possible to change from one (typically vendor specific) technology to another (typically vendor specific) technology without modifying the existing receiver infrastructure.

Various aspects and embodiments of the invention are set out in the appended claims.

Some embodiments of the invention propose a smartcard for use in a receiver of a conditional access system. The smartcard comprises one or more contacts for detachably connecting the smartcard to the receiver. The smartcard further comprises an electrical circuit comprising an input/output module for communication with the receiver. The smartcard further comprises a processor and a memory. The electrical circuit is connected to the one or more contacts and is configured to be activated after connection with the receiver through the contacts. The processor is configured for detecting activation of the electrical circuit and reading a first operation mode identifier for identifying a first protocol from the memory in response to detecting the activation. The processor is further configured for transmitting a first signal to the receiver in accordance with the first protocol. The processor is further configured for detecting a failed attempt to communicate with the receiver and subsequently changing in the memory the first operation mode identifier into a second operation mode identifier for identifying a second protocol.

Some embodiments of the invention propose a method for use in a smartcard. The method comprises the step of detecting activation of an electrical circuit. The method further comprises the step of reading a first operation mode identifier for identifying a first protocol from a memory in response to detecting the activation. The method further comprises the step of transmitting a first signal to a receiver in accordance with the first protocol. The method further comprises the step of detecting a failed attempt to communicate with the receiver and subsequently changing in the memory the first operation mode identifier into a second operation mode identifier for identifying a second protocol.

Thus the smartcard of the invention advantageously enables operation with a receiver that uses a particular protocol for communication with the smartcard, by switching to the particular protocol after a failed attempt to communicate with the receiver and reinserting the smartcard into the receiver. Preferably the smartcard supports multiple protocols enabling the smartcard to operate with receivers of different technologies after a number of reinsertions - but possibly after the first insertion - into the receiver.

The embodiments of claims 2 and 10 advantageously enable the smartcard to receive a response signal from the receiver within a predefined timeframe before deciding that communication with the receiver failed.

The embodiments of claims 3 and 11 advantageously enable switching to another protocol only after a predefined number of reinsertions. This ensures that the smartcard does not change the operation mode identifier immediately in case the receiver is temporary unable to send the response signal for whatever reason.

The embodiments of claims 4 and 12 advantageously enable the smartcard to operate with ISO 7816-3 compliant receivers.

The embodiments of claims 5 and 13 advantageously enable translation of vendor specific instructions to allow the receiver to operate according to its original proprietary technology.

The embodiments of claims 6 and 14 advantageously enable receiving EMMs and/or ECMs from a head-end system trough a receiver of a different proprietary technology.

Some embodiments of the invention propose a conditional access system comprising a head-end system, a receiver and a smartcard having one or more of the above mentioned features. This advantageously enables the head-end system and the smartcard to operation with a receiver of a different proprietary technology.

The embodiment of claim 8 advantageously enables an incompatible receiver to become operational in the conditional access system.

Some embodiments of the invention propose a computer program product. The computer program product comprises software code portions configured for, when run in a memory of a smartcard, executing one or more of the above mentioned method steps. This advantageously enables the smartcard to be manufactured separately from the computer program product.

Hereinafter, embodiments of the invention will be described in further detail. It should be appreciated, however, that these embodiments may not be construed as limiting the scope of protection for the present invention.

### BRIEF DESCRIPTION OF THE DRAWINGS

Aspects of the invention will be explained in greater detail by reference to exemplary embodiments shown in the drawings, in which:
Fig.1 shows an architecture of a conditional access network of an exemplary embodiment of the invention;
Fig.2 shows a time-sequence diagram for signals between a smartcard and a receiver of an exemplary embodiment of the invention;
Fig.3 shows a head-end system of an exemplary embodiment of the invention;
Fig.4 shows a smartcard of an exemplary embodiment of the invention;
Fig.5 shows a smartcard of an exemplary embodiment of the invention;
Fig.6 shows a schematic view of a method of an exemplary embodiment of the invention;
Fig.7 shows a schematic view of a part of method of an exemplary embodiment of the invention;
Fig.8 shows a schematic view of a method of an exemplary embodiment of the invention;
Fig.9 shows a state machine of smartcard of an exemplary embodiment of the invention.

### DETAILED DESCRIPTION OF THE DRAWINGS

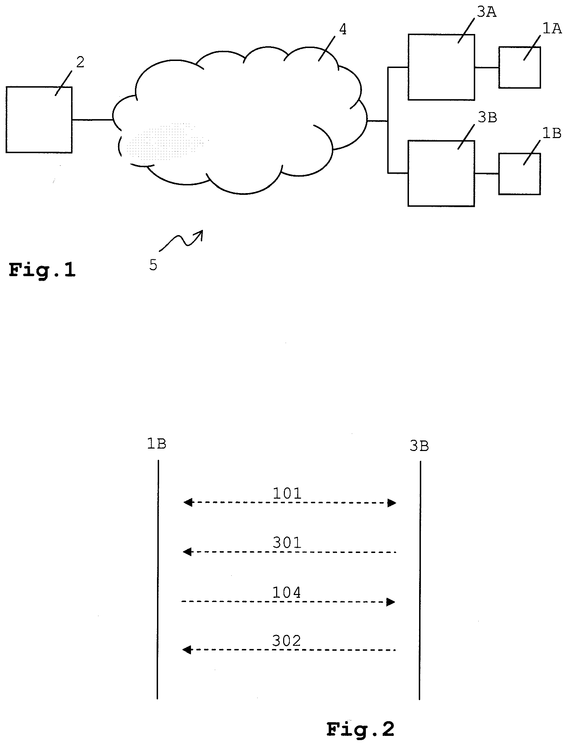

A simplified overview of an architecture of a conditional access system 5 is shown in Fig.1. The conditional access system 5 comprises a head-end system 2, receivers 3A,3B, smartcards 1A,1B for use in the receivers 1A,1B and a broadcast network 4 for transmission of signals from the head-end system 2 to a receiver 3A,3B and smartcard 1A,1B. Typically a conditional access network comprises many receivers and smartcards, e.g. in the order of hundreds or thousands or even more. The head-end system 2 broadcasts encrypted television programs, or other encrypted services, to the receiver 3A,3B. To enable decryption of the encrypted television programs in the receiver 3A,3B the head-end system 2 further broadcasts EMMs and/or ECMs, which are received in the receiver 3A,3B and forwarded to the smartcard 1A,1B for processing. The head-end system 2 uses a vendor specific, typically proprietary, technology for communication with the smartcard 1A,1B. This means that EMMs and ECMs are formatted according to a vendor specific protocol. If the smartcard 1A,1B is of the same vendor as the head-end system 2, the smartcard 1A,1B understands the format of the EMMs and ECMs and is able to process the EMMs and ECMs. The smartcard 1A,1B and the receiver 3A,3B use a conditional access system specific command set to exchange information such as descrambling keys, conditional access filter parameters and entitlement information.

The receiver must be compatible with the vendor specific technology to be able to receive the EMMs and ECMs from the head-end system 2 and forward the EMMs and ECMs to the smartcard. This means that firstly the receiver and smartcard must be able to communicate and secondly the receiver must be able to recognize the EMMs and ECMs in the broadcasted signal. If the receiver, e.g. receiver 3A, is bought specifically for use with the head-end system 2 and the smartcard 1A, then there should be no compatibility issue. In this case the firmware of the receiver 3A is specifically programmed according to the vendor specific technology. If the receiver, e.g. receiver 3B, is not compatible with the head-end system 2 and the smartcard 1B, then no communication between the smartcard 1B and the receiver 3B is possible and no EMMs and ECMs are processed by the smartcard 1B. Consequently the encrypted television program cannot be decrypted by the receiver 3B.

To enable the initially incompatible receiver 3B to communicate with the smartcard 1B, the smartcard 1B is capable of changing its operation mode to a protocol that is compatible with the receiver 3B.

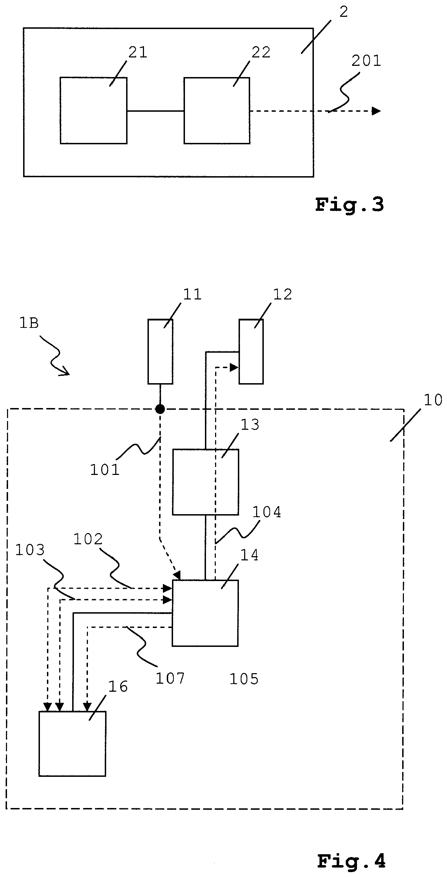

In Fig.4 an exemplary embodiment of smartcard 1B is shown. The smartcard 1B comprises an electrical circuit 10 and two contacts 11,12 for detachably connecting the smartcard 1B to the receiver 3B. Contact 11 is used to connect the electrical circuit 10 to a power supply of the receiver 3B. Contact 12 is used for communication with the receiver 3B. It is possible to use more contacts for connecting to the power supply and for communication with the receiver 3B. The electrical circuit 10 comprises a central processor 14 which is connected to a memory 16 and an input/output module 13. The memory 16 is a non-volatile that retains stored information even when not powered. The memory is, amongst others, used to store an operation mode identifier and different protocol definitions.

Upon inserting the smartcard 1B into the receiver 3B, the contact 11 is connected to the power supply of the receiver 3B and the electrical circuit 10 is activated. Through electrical elements not shown in Fig.4 the processor 14 detects the activation of the electrical circuit 10, which is indicated by dashed arrow 101. This triggers the processor 14 to read an operation mode identifier from the memory 16, which is indicated by dashed arrow 102. The operation mode identifier is used to start the smartcard 1B in a specific operation mode using a particular protocol for communication with the receiver 3B. Dashed arrow 103 indicates the selection of the protocol and reading of the protocol definition from the memory 16 based on the operation mode identifier, which is subsequently used to start the smartcard 1B in the specific operation mode. When started in the specific operation mode, the smartcard 1B communicates with the receiver 3B in accordance with the protocol. Dashed arrow 104 indicates a signal that is transmitted via the input/output module 13 and through contact 12 to the receiver 3B. The receiver 3B is expected to return a response signal, indicating a correct receipt of the signal. If no response signal is received, then it is concluded that the receiver 3B is incompatible with the protocol used. This triggers the processor 14 to change the operation mode identifier in the memory 16 to a value indicating another protocol supported by the smartcard 1B. Dashed arrow 107 indicates the change of the operation mode identifier in the memory 16.

As long as the smartcard 1B remains inserted into the receiver 3B no communication is possible between the smartcard 1B and the receiver 3B as the operation mode and accompanying protocol of the smartcard 1B is incompatible with the receiver 3B. A reinsertion of the smartcard 1B into the receiver 3B will restart the smartcard 1B as described above, only this time the operation mode identifier has a different value resulting in the smartcard 1B starting in another operation mode and thus using another protocol. If this protocol is compatible with the receiver 3B, a return signal will be received. Otherwise, if other operation modes are available on the smartcard, the operation mode identifying is changed again into another value and the smartcard 1B can be reinserted into the receiver 3B again.

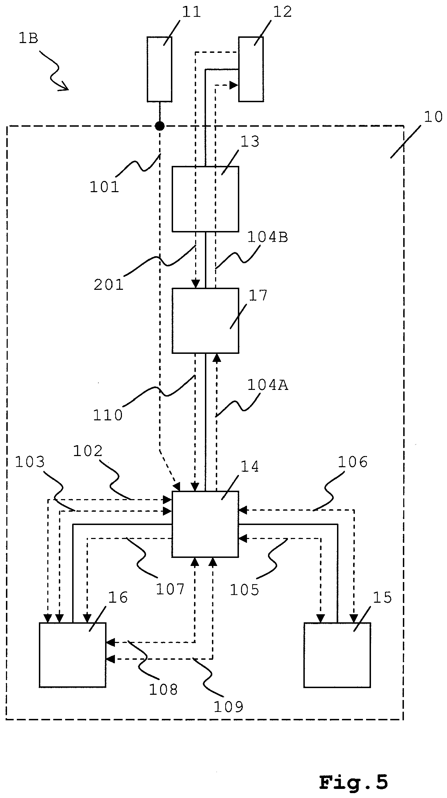

The change of the operation mode identifier can optionally be postponed until the smartcard 1B has been reinserted a predefined number of times, e.g. three times. Referring to Fig.5, hereto the processor uses a counter value stored in the memory 16. Initially the counter value has, e.g., a value of "0". After the first timeout trigger 106 the counter value is increased by 1, which is indicated by dashed arrow 108. Next the processor 14 reads the counter value from the memory 15 (dashed arrow 109) and only if the counter value equals the predefined value of "3" the operation mode identifier is changed and the counter value is rest to "0". The use of the counter value is not restricted to the given example. The counter may e.g. be a countdown counter or any other counter mechanism.

The smartcard of the invention can be used with ISO 7816-3 compliant receivers. An ISO 7816-3 compliant receiver transmits a reset signal to the smartcard after insertion of the smartcard into the receiver. The reset signal is a standardised signal and is independent of the vendor specific technology. In Fig.2 a time-sequence diagram is shown for communication between a smartcard 1B and an ISO 7816-3 compliant receiver 3B. Upon insertion of the smartcard 1B into the receiver 3B the electrical circuit 10 of the smartcard 1B is activated and the processor 14 detects the activation of the electrical circuit 10. This is indicated by dashed arrow 101. Next the receiver 3B transmits the reset signal 301 to the smartcard 1B. Only after having received the reset signal 301, the smartcard 1B transmits an answer-to-reset signal 104 to the receiver 3B. Signal 104 is in accordance with the vendor specific protocol, as described above. If the receiver 3B is compatible with the used protocol, a response signal 302 is transmitted to the smartcard 1B.

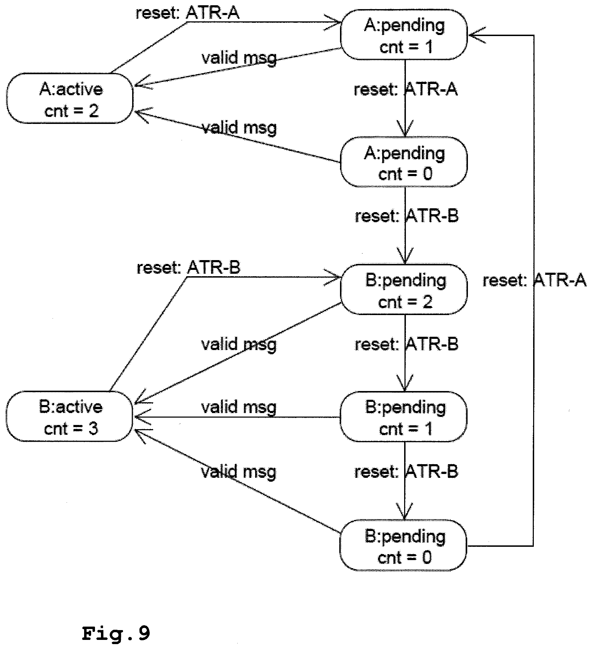

A state machine module 18 can be used to keep track of the current state of the smartcard 1B, e.g. "pending" in case no successful communication has been established with the receiver 3B or "active" in case communication with the receiver 3B is successful. The state machine module 18 keeps track of whether after activation of the electrical circuit 10 a valid message according to the current protocol mode is received or not. It is possible to use the reset signal as a trigger for the state machine module 18 instead of the activation of the electrical circuit 10. In Fig.9 an example of a state machine is shown that can be implemented in the state machine module 18. Two possible operation modes identified by "A" and "B" are shown. After having received a valid message from the receiver 3B, i.e. after a successful communication with the receiver 3B according to the current protocol, the state machine module 18 is put in an "active" state. After a reset signal is received from the receiver 3B, the state machine module 18 is put in a "pending" state. From this "pending" state it either returns to the "active" state of the current operation mode, i.e. when a valid message is received, or to the "pending" state of the next operational mode if the card has been reset a predefined number of times while in the "pending" state. The number of consecutive resets before changing the operation mode identifier to the next operation mode can be operation mode dependent. It can e.g. be dependent on how many times the receiver 3B typically transmits a reset signal to the smartcard 1B after it starts up, i.e. from power-down or when returning from stand-by. In Fig.9 it takes three consecutive resets without valid messages received in-between to switch from operation mode A to B, and four to switch back. After the activation of the electrical circuit 10 or receiving the reset signal, the counter (indicated by cnt in Fig.9) is tested. When the counter equals 0, the operation mode identifier is changed to the next operation mode, an answer-to-reset signal according to the protocol of the new operation mode is returned, and the counter is set to the (possibly mode specific) initial value minus 1. When cnt > 0 after a reset, an answer-to-reset signal of the current mode is returned and cnt is decremented by 1. If in the "pending" state a valid message is received from receiver 3B, then the state becomes "active" and the counter is set to the initial value.

The smartcard 1B optionally uses an adaptation module for translating signals from and to the receiver 3B. In Fig.5 the adaptation module is indicated as element 17. The adaptation module 17 operates in-between the processor 14 and the input/output module 13 and is e.g. implemented as an adaptation layer in a protocol stack. When using an adaptation module 17, the adaptation module 17 is started in an operation mode using a particular protocol as identified by the operation mode identifier. The adaptation module 17 enables the smartcard 1B to operate in a default operation mode, while communication with the receiver 3B is translated into the protocol of the receiver 3B. Hereto the adaptation module 17 translates instruction 104A, also known as commands from a command set, from the processor 14 into instructions understood by the receiver 3B and generates the first signal 104B which is transmitted to the receiver 3B.

Optionally a timer is used for timing the receipt the response signal. Dashed arrow 105 in Fig.5 indicates an instruction to start the timer at the clock module 15. When a predefined time-out value, e.g. 10 seconds, is reached, the clock module 15 triggers the processor 14 as indicated by dashed arrow 106. The timeout triggers the processor 14 to change the operation mode identifier in the memory 16 to a value indicating another protocol supported by the smartcard 1B.

To enable the head-end system 2 to communicate with the initially incompatible receiver 3B, the head-end system 2 is capable of encapsulating EMMs and/or ECMs of an incompatible protocol with data packets of a compatible protocol. In Fig.3 a head-end system 2 of an exemplary embodiment of the invention is shown, wherein a signal generator 21 generates the encapsulated data packets and the transmission module 22 transmits the encapsulated data packets to the receiver 3B. The signal carrying the encapsulated data packets is indicated by dashed arrow 201. When the receiver 3B receives the signal 201, it recognizes the encapsulated EMMs and ECMs and transmits the encapsulated EMMs and ECMs to the smartcard 1B. In the smartcard 1B the adaptation module 17 removes the encapsulation and the EMMs and ECMs are obtained. The payload of the EMMs and ECMs is subsequently processed in the smartcard 1B.

The head-end system 2 enables e.g. a new conditional access system 5 to operate with an existing and incompatible receiver infrastructure including receiver 3B by including cryptographic messages such as EMMs and ECMs of the new conditional access system in a message format understood by the existing receiver infrastructure. This allows the receiver 3B to parse the cryptographic message stream in signal 201. The smartcard 1B of the new conditional access system 5 contains the adaptation layer 17 that re-uses the command set from the previously used conditional access system as supported by the receiver 3B. This enables the smartcard 1B to instruct the receiver 3B to search for messages destined for the smartcard 1B. After finding the relevant messages, the receiver 3B sends them to the smartcard 1B using the original command set. The smartcard 1B removes the original message container to end up with a cryptographic message that it can process. The result of the smartcard 1B processing is conveyed to the receiver 3B again using the command set of the older conditional access system.

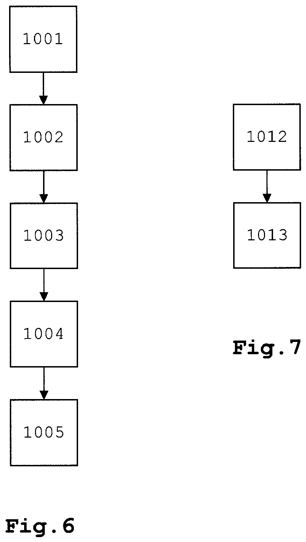

In Fig.6 a schematic view of a method of an exemplary embodiment of the invention is shown. The steps show in Fig.6 can e.g. be performed in the smartcard 1B of Fig.4. In step 1001 activation of the electrical circuit 1 is detected. In step 1002 the first operation mode identifier is read from the memory 16. In step 1003 the first signal is transmitted to the receiver 3B. In step 1004 it is detected that communication with the receiver 3B fails. In step 1005 the first operation mode identifier is changed into the second mode identifier in the memory 16.

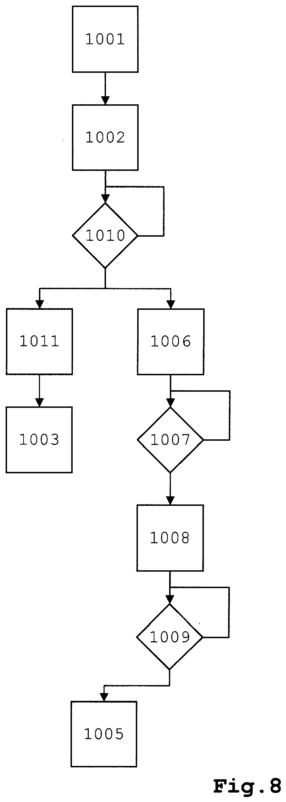

In Fig.8 a schematic view of a method of an exemplary embodiment of the invention is shown. The steps shown in Fig.8 can e.g. be performed in the smartcard 1B of Fig.5. In step 1001 activation of the electrical circuit 1 is detected. In step 1002 the first operation mode identifier is read from the memory 16. In step 1010 the smartcard 1B waits for a reset signal from the receiver 3B. In step 1011 one or more instructions (104A) from the processor (14) are translated into one or more translated instructions. In step 1003 the translated instructions are transmitted to the receiver 3B. Substantially at the same time of transmitting the instructions to the receiver 3B, a timer is started in step 1006 for timing a response signal from the receiver 3B. In step 1007 the timer runs until a predefined timeout, e.g. 10 seconds, is reached. In step 1008 a counter value is changed. In step 1009 the counter value is compared with a predefined threshold value. If the counter value equals the predefined threshold value, then in step 1005 the first operation mode identifier is changed into the second mode identifier in the memory 16.

Fig.7 shows two sub-steps of a method of an exemplary embodiment of the invention. The steps shown in Fig.7 can e.g. be performed in the smartcard 1B of Fig.5. In step 1012 encapsulated EMMs and ECMs are received from the receiver 3B. In step 1013 the encapsulation is removed and the EMMs and ECMs are obtained to allow its payload to be processed.

A computer program product comprising software code portions can be configured for executing the method steps of the invention, e.g. as shown in Figs.6-8. After installing the computer program product in the memory 16 of a smartcard 1A,1B, the processor 14 of the smartcard 1A,1B can, when the smartcard 1A,1B is inserted into a receiver 3A,3B, execute the software code portions.

In an alternative embodiment of the invention not shown in the figures, the operation mode identifier is changed by a switch that is part of the smartcard. The switch is e.g. a dipswitch that is accessible from the outside of the smartcard (1B). The switch is connected to the electrical circuit (10). A change of the position of the switch results in changing the operation mode identifier in the memory (16). With the switch in a particular position, the smartcard (1B) is to be inserted into the receiver (3B) to activate the electrical circuit (10). The processor (14) acquires the position of the switch and writes a corresponding identifier to the memory location of the operation mode identifier. Further the smartcard (1B) is configured to operate as described above, except for changing the operation mode identifier which is controlled by the switch.

## Claims

1. Smartcard (1A,1B) for use in a receiver (3A,3B) of a conditional access system (5), comprising:
one or more contacts (11,12) for detachably connecting the smartcard (1A,1B) to the receiver (3A,3B); and
an electrical circuit (10) comprising an input/output module (13) for communication with the receiver (3A,3B), a processor (14) and a memory (16), the electrical circuit (10) being connected to the one or more contacts (11,12) and being configured to be activated after connection with the receiver (3A,3B) through the one or more contacts (11,12),
wherein the processor (14) is configured for:
detecting (101) activation of the electrical circuit (10) and reading (102) a first operation mode identifier for identifying a first protocol from the memory (16) in response to detecting the activation;
transmitting a first signal (104) to the receiver (3A,3B) in accordance with the first protocol; and
detecting a failed attempt to communicate with the receiver (3A,3B) and subsequently changing (107) in the memory (16) the operation mode identifier into a second operation mode identifier for identifying a second protocol when the smartcard is reinserted into the receiver.

2. Smartcard (1A,1B) according to claim 1, further comprising a clock module (15) and wherein the processor (14) is further configured for:
substantially at the same time as transmitting the first signal (104) to the receiver (3A,3B), starting (105) a timer for timing a response signal from the receiver (3A,3B) in response to the first signal using the clock module (15); and
detecting (106) that the timer reaches a predefined timeout,
and wherein the processor is configured for changing the first operation mode identifier into the second operation mode identifier after detecting the predefined timeout.

3. Smartcard (1A,1B) according to any one of the claims 1-2, wherein the processor (14) is further configured for:
changing (108) a counter value stored in the memory (16) after detecting the failed attempt to communicate; and
changing (107) the operation mode identifier only if the counter value equals a predefined threshold value.

4. Smartcard (1A,1B) according to any one of the claims 1-3, wherein the processor (14) is further configured for receiving a reset signal (301) from the receiver (3A,3B) prior to transmitting the first signal (104) to the receiver (3A,3B) and wherein the first signal (104) is an answer-to-reset signal.

5. Smartcard (1A,1B) according to any one of the claims 1-4, further comprising an adaptation module (17) configured for translating one or more instructions (104A) from the processor (14) into one or more translated instructions in accordance with the first protocol and wherein the first signal (104B) is transmitted from the adaptation module and comprises the one or more translated instructions.

6. Smartcard (1A,1B) according to claim 5, wherein the adaptation module (17) is further configured for:
receiving a second signal (201) from the receiver (3A,3B), the second signal (201) comprising a first data packet in accordance with a third protocol that is encapsulated by a second data packet in accordance with the first protocol; and
obtaining a payload portion from the first data packet for processing by the processor (14).

7. Conditional access system (5) comprising a head-end system (2), a receiver (3A,3B) and a smartcard (1A,1B) according to any one of the claims 1-6.

8. Conditional access system (5) according to claim 7, wherein the smartcard (1A,1B) is initially incompatible with the receiver (3A,3B).

9. Method for use in a smartcard (1A,1B), comprising the steps of:
detecting (1001) activation of an electrical circuit (10) and reading (1002) a first operation mode identifier for identifying a first protocol from a memory (16) in response to detecting the activation;
transmitting (1003) a first signal (104) to a receiver (3A,3B) in accordance with the first protocol; and
detecting (1004) a failed attempt to communicate with the receiver (3A,3B) and subsequently changing (1005) in the memory (16) the first operation mode identifier into a second operation mode identifier for identifying a second protocol when the smartcard is reinserted into the receiver.

10. Method according to claim 9, further comprising the steps of:
substantially at the same time as transmitting (1003) the first signal (104) to the receiver (3A,3B), starting (1006) a timer for timing a response signal from the receiver (3A,3B) in response to the first signal using a clock module (15); and
detecting (1007) that the timer reaches a predefined timeout,
and wherein the first operation mode identifier is changed into the second operation mode identifier after detecting the predefined timeout.

11. Method according to claim 10, further comprising the steps of:
changing (1008) a counter value stored in the memory (16) after detecting (1007) that the timer reaches the predefined timeout; and
changing (1009) the operation mode identifier only if the counter value equals a predefined threshold value.

12. Method according to any one of the claims 9-11, further comprising the steps of receiving (1010) a reset signal (301) from the receiver (3A,3B) prior to transmitting (1003) the first signal (104) to the receiver (3A,3B) and wherein the first signal (104) is an answer-to-reset signal.

13. Method according to any one of the claims 9-12, further comprising the steps of translating (1011) one or more instructions (104A) from the processor (14) into one or more translated instructions in accordance with the first protocol and wherein the first signal (104B) comprises the one or more translated instructions.

14. Method according to claim 13, further comprising the steps of:
receiving (1012) a second signal (201) from the receiver (3A,3B), the second signal (201) comprising a first data packet in accordance with a third protocol that is encapsulated by a second data packet in accordance with the first protocol; and
obtaining (1013) a payload portion from the first data packet for processing by the processor (14).

15. A computer program product comprising software code portions configured for, when run in a memory (16) of a smartcard (1A,1B), executing the method steps according to any of claims 9 to 14.

## Patentansprüche

1. Smartcard (1 A, 1 B) zur Verwendung in einem Empfänger (3A, 3B) eines Systems mit bedingtem Zugang (5), die Folgendes aufweist:
einen oder mehrere Kontakte (11, 12) zum lösbaren Verbinden der Smartcard (1 A, 1 B) mit dem Empfänger (3A, 3B); und
eine elektrische Schaltung (10), die ein Eingabe-/Ausgabe-Modul (13) zur Kommunikation mit dem Empfänger (3A, 3B), einen Prozessor (14) und einen Speicher (16) aufweist, wobei die elektrische Schaltung (10) mit dem einen oder den mehreren Kontakten (11, 12) verbunden ist und dazu ausgestaltet ist, nach dem Verbinden mit dem Empfänger (3A, 3B) durch den einen oder die mehreren Kontakte (11, 12) aktiviert zu werden,
wobei der Prozessor (14) zu Folgendem ausgestaltet ist:
Erfassen (101) einer Aktivierung der elektrischen Schaltung (10) und Ablesen (102) einer ersten Betriebsmoduskennung zur Identifikation eines ersten Protokolls aus dem Speicher (16) ansprechend auf die Erfassung der Aktivierung;
Übertragen eines ersten Signals (104) an den Empfänger (3A, 3B) gemäß dem ersten Protokoll; und
Erfassen eines fehlgeschlagenen Versuchs zur Kommunikation mit dem Empfänger (3A, 3B) und anschließendes Ändern (107) in dem Speicher (16) der Betriebsmoduskennung zu einer zweiten Betriebsmoduskennung zur Identifikation eines zweiten Protokolls, wenn die Smartcard erneut in den Empfänger eingesteckt wird.

2. Smartcard (1 A, 1 B) nach Anspruch 1, die ferner ein Taktmodul (15) aufweist, und wobei der Prozessor (14) ferner zu Folgendem ausgestaltet ist:
im Wesentlichen zur selben Zeit wie die Übertragung des ersten Signals (104) an den Empfänger (3A, 3B), Starten (105) eines Timers zum Timen eines Antwortsignals von dem Empfänger (3A, 3B) ansprechend auf das erste Signal unter Verwendung des Taktmoduls (15); und
Erfassen (106), dass der Timer eine vorgegebene Zeitsperre erreicht,
und wobei der Prozessor dazu ausgestaltet ist, die erste Betriebsmoduskennung zur zweiten Betriebsmoduskennung nach der Erfassung der vorgegebenen Zeitsperre zu ändern.

3. Smartcard (1 A, 1 B) nach einem der Ansprüche 1 bis 2, wobei der Prozessor (14) ferner zu Folgendem ausgestaltet ist:
Ändern (108) eines in dem Speicher (16) gespeicherten Zählerwerts nach der Erfassung des fehlgeschlagenen Versuchs zur Kommunikation; und
Ändern (107) der Betriebsmoduskennung, lediglich wenn der Zählerwert einem vorgegebenen Schwellenwert entspricht.

4. Smartcard (1 A, 1 B) nach einem der Ansprüche 1 bis 3, wobei der Prozessor (14) ferner dazu ausgestaltet ist, ein Rücksetzsignal (301) von dem Empfänger (3A, 3B) vor der Übertragung des ersten Signals (104) an den Empfänger (3A, 3B) zu empfangen, und wobei das erste Signal (104) ein Rücksetzantwortsignal (Answer to Reset-Signal) ist.

5. Smartcard (1 A, 1 B) nach einem der Ansprüche 1 bis 4, die ferner ein Anpassungs-modul (17) aufweist, das dazu ausgestaltet ist, einen oder mehrere Befehle (104A) von dem Prozessor (14) in einen oder mehrere umgewandelte Befehle gemäß dem ersten Protokoll umzuwandeln, und wobei das erste Signal (104B) von dem Anpassungsmodul übertragen wird und den einen oder die mehreren umgewandelten Befehle aufweist.

6. Smartcard (1 A, 1 B) nach Anspruch 5, wobei das Anpassungsmodul (17) ferner zu Folgendem ausgestaltet ist:
Empfangen eines zweiten Signals (201) von dem Empfänger (3A, 3B), wobei das zweite Signal (201) ein erstes Datenpaket gemäß einem dritten Protokoll aufweist, das von einem zweiten Datenpaket gemäß dem ersten Protokoll eingekapselt ist; und
Erhalten eines Nutzlastabschnitts von dem ersten Datenpaket zur Verarbeitung durch den Prozessor (14).

7. System mit bedingtem Zugang (5), das ein Empfangsstellensystem (2), einen Empfänger (3A, 3B) und eine Smartcard (1 A, 1 B) nach einem der Ansprüche 1 bis 6 aufweist.

8. System mit bedingtem Zugang (5) nach Anspruch 7, wobei die Smartcard (1 A, 1 B) zunächst nicht mit dem Empfänger (3A, 3B) kompatibel ist.

9. Verfahren zur Verwendung in einer Smartcard (1 A, 1 B), das die folgenden Schritte aufweist:
Erfassen (1001) einer Aktivierung einer elektrischen Schaltung (10) und Ablesen (1002) einer ersten Betriebsmoduskennung zur Identifikation eines ersten Protokolls aus einem Speicher (16) ansprechend auf die Erfassung der Aktivierung;
Übertragen (1003) eines ersten Signals (104) an einen Empfänger (3A, 3B) gemäß dem ersten Protokoll; und
Erfassen (1004) eines fehlgeschlagenen Versuchs zur Kommunikation mit dem Empfänger (3A, 3B) und anschließendes Ändern (1005) in dem Speicher (16) der ersten Betriebsmoduskennung zu einer zweiten Betriebsmoduskennung zur Identifikation eines zweiten Protokolls, wenn die Smartcard erneut in den Empfänger eingesteckt wird.

10. Verfahren nach Anspruch 9, das ferner die folgenden Schritte aufweist:
im Wesentlichen zur selben Zeit wie die Übertragung (1003) des ersten Signals (104) an den Empfänger (3A, 3B), Starten (1006) eines Timers zum Timen eines Antwortsignals von dem Empfänger (3A, 3B) ansprechend auf das erste Signal unter Verwendung eines Taktmoduls (15); und
Erfassen (1007), dass der Timer eine vorgegebene Zeitsperre erreicht,
und wobei die erste Betriebsmoduskennung zur zweiten Betriebsmoduskennung nach der Erfassung der vorgegebenen Zeitsperre geändert wird.

11. Verfahren nach Anspruch 10, das ferner die folgenden Schritte aufweist:
Ändern (1008) eines in dem Speicher (16) gespeicherten Zählerwerts nach der Erfassung (1007), dass der Timer die vorgegebene Zeitsperre erreicht; und
Ändern (1009) der Betriebsmoduskennung, lediglich wenn der Zählerwert einem vorgegebenen Schwellenwert entspricht.

12. Verfahren nach einem der Ansprüche 9 bis 11, das ferner den Schritt des Empfangens (1010) eines Rücksetzsignals (301) von dem Empfänger (3A, 3B) vor der Übertragung (1003) des ersten Signals (104) an den Empfänger (3A, 3B) aufweist, und wobei das erste Signal (104) ein Rücksetzantwortsignal (Answer to Reset-Signal) ist.

13. Verfahren nach einem der Ansprüche 9 bis 12, das ferner den Schritt des Umwan+delns (1011) von einem oder mehreren Befehlen (104A) von dem Prozessor (14) in einen oder mehrere umgewandelte Befehle gemäß dem ersten Protokoll aufweist, und wobei das erste Signal (104B) den einen oder die mehreren umgewandelten Befehle aufweist.

14. Verfahren nach Anspruch 13, das ferner die folgenden Schritte aufweist:
Empfangen (1012) eines zweiten Signals (201) von dem Empfänger (3A, 3B), wobei das zweite Signal (201) ein erstes Datenpaket gemäß einem dritten Protokoll aufweist, das von einem zweiten Datenpaket gemäß dem ersten Protokoll eingekapselt ist; und
Erhalten (1013) eines Nutzlastabschnitts von dem ersten Datenpaket zur Verarbeitung durch den Prozessor (14).

15. Computerprogrammprodukt mit Softwarecodeabschnitten, das, wenn es in einem Speicher (16) einer Smartcard (1 A, 1 B) läuft, dazu ausgestaltet ist, die Verfahrensschritte nach einem der Ansprüche 9 bis 14 auszuführen.

## Revendications

1. Carte à puce intelligente (1A, 1B) pour une utilisation dans un récepteur (3A, 3B) d'un système d'accès conditionnel (5), comprenant :
un ou plusieurs contact(s) (11, 12) pour connecter de manière détachable la carte à puce intelligente (1A, 1B) au récepteur (3A, 3B) ; et
un circuit électrique (10) comprenant un module d'entrée/sortie (13) pour une communication avec le récepteur (3A, 3B), un processeur (14) et une mémoire (16), le circuit électrique (10) étant connecté au ou aux plusieurs contact(s) (11, 12) et étant configuré pour être activé après la connexion avec le récepteur (3A, 3B) par l'intermédiaire du ou des plusieurs contact(s) (11, 12),
où le processeur (14) est configuré pour :
détecter (101) l'activation du circuit électrique (10) et lire (102) un premier identifiant de mode de fonctionnement pour identifier un premier protocole à partir de la mémoire (16) en réponse à la détection de l'activation ;
transmettre un premier signal (104) au récepteur (3A, 3B) conformément au premier protocole ; et
détecter une tentative échouée pour communiquer avec le récepteur (3A, 3B) et ensuite changer (107) dans la mémoire (16) l'identifiant de mode de fonctionnement en un deuxième identifiant de mode de fonctionnement pour identifier un deuxième protocole lorsque la carte à puce intelligente est réinsérée dans le récepteur.

2. Carte à puce intelligente (1A, 1B) selon la revendication 1, comprenant en outre un module d'horloge (15) et dans laquelle le processeur (14) est en outre configuré pour :
démarrer (105), essentiellement en même temps que la transmission du premier signal (104) au récepteur (3A, 3B), un chronomètre pour chronométrer un signal de réponse provenant du récepteur (3A, 3B) en réponse au premier signal en utilisant le module d'horloge (15) ; et
détecter (106) que le chronomètre a atteint un délai prédéfini,
et dans laquelle le processeur est configuré pour changer le premier identifiant de mode de fonctionnement en le deuxième identifiant de mode de fonctionnement après détection du délai prédéfini.

3. Carte à puce intelligente (1A, 1B) selon l'une quelconque des revendications 1 à 2, dans laquelle le processeur (14) est en outre configuré pour :
changer (108) une valeur de compteur stockée dans la mémoire (16) après détection de la tentative de communication échouée ; et
changer (107) l'identifiant de mode de fonctionnement seulement si la valeur de compteur est égale à une valeur seuil prédéfinie.

4. Carte à puce intelligente (1A, 1B) selon l'une quelconque des revendications 1 à 3, dans laquelle le processeur (14) est en outre configuré pour recevoir un signal de remise à zéro (301) en provenance du récepteur (3A, 3B) avant de transmettre le premier signal (104) au récepteur (3A, 3B) et dans laquelle le premier signal (104) est un signal de réponse à la remise à zéro.

5. Carte à puce intelligente (1A, 1B) selon l'une quelconque des revendications 1 à 4, comprenant en outre un module d'adaptation (17) configuré pour traduire une ou plusieurs instruction(s) (104A) provenant du processeur (14) en une ou plusieurs instruction(s) traduite(s) conformément au premier protocole et dans laquelle le premier signal (104B) est transmis à partir du module d'adaptation et comprend la ou les plusieurs instruction(s) traduite(s).

6. Carte à puce intelligente (1A, 1B) selon la revendication 5, dans laquelle le module d'adaptation (17) est en outre configuré pour :
recevoir un deuxième signal (201) en provenance du récepteur (3A, 3B), le deuxième signal (201) comprenant un premier paquet de données conformément à un troisième protocole qui est encapsulé par un deuxième paquet de données conformément au premier protocole ; et
obtenir une partie de données utiles à partir du premier paquet de données pour la traiter par le processeur (14).

7. Système d'accès conditionnel (5) comprenant un système de tête de réseau (2), un récepteur (3A, 3B) et une carte à puce intelligente (1A, 1B) selon l'une quelconque des revendications 1 à 6.

8. Système d'accès conditionnel (5) selon la revendication 7, dans lequel la carte à puce intelligente (1A, 1B) est initialement incompatible avec le récepteur (3A, 3B).

9. Procédé pour une utilisation dans une carte à puce intelligente (1A, 1B), comprenant les étapes consistant :
à détecter (1001) l'activation d'un circuit électrique (10) et à lire (1002) un premier identifiant de mode de fonctionnement pour identifier un premier protocole à partir d'une mémoire (16) en réponse à la détection de l'activation ;
à transmettre (1003) un premier signal (104) à un récepteur (3A, 3B) conformément au premier protocole ; et
à détecter (1004) une tentative échouée de communiquer avec le récepteur (3A, 3B) et ensuite à changer (1005) dans la mémoire (16) le premier identifiant de mode de fonctionnement en un deuxième identifiant de mode de fonctionnement pour identifier un deuxième protocole lorsque la carte à puce intelligente est réinsérée dans le récepteur.

10. Procédé selon la revendication 9, comprenant en outre les étapes consistant :
à démarrer (1006), essentiellement en même temps que la transmission (1003) du premier signal (104) au récepteur (3A, 3B), un chronomètre pour chronométrer un signal de réponse provenant du récepteur (3A, 3B) en réponse au premier signal en utilisant un module d'horloge (15) ; et
à détecter (1007) que le chronomètre a atteint un délai prédéfini,
et dans lequel le premier identifiant de mode de fonctionnement est changé en le deuxième identifiant de mode de fonctionnement après détection du délai prédéfini.

11. Procédé selon la revendication 10, comprenant en outre les étapes consistant :
à changer (1008) une valeur de compteur stockée dans la mémoire (16) après avoir détecté (1007) que le chronomètre a atteint le délai prédéfini ; et
à changer (1009) l'identifiant de mode de fonctionnement seulement si la valeur de compteur est égale à une valeur seuil prédéfinie.

12. Procédé selon l'une quelconque des revendications 9 à 11, comprenant en outre les étapes consistant à recevoir (1010) un signal de remise à zéro (301) en provenance du récepteur (3A, 3B) avant de transmettre (1003) le premier signal (104) au récepteur (3A, 3B) et dans lequel le premier signal (104) est un signal de réponse à la remise à zéro.

13. Procédé selon l'une quelconque des revendications 9 à 12, comprenant en outre les étapes consistant à traduire (1011) une ou plusieurs instruction(s) (104A) provenant du processeur (14) en une ou plusieurs instruction(s) traduite(s) conformément au premier protocole et dans lequel le premier signal (104B) comprend la ou les plusieurs instruction(s) traduite(s).

14. Procédé selon la revendication 13, comprenant en outre les étapes consistant :
à recevoir (1012) un deuxième signal (201) en provenance du récepteur (3A, 3B), le deuxième signal (201) comprenant un premier paquet de données conformément à un troisième protocole qui est encapsulé par un deuxième paquet de données conformément au premier protocole ; et
à obtenir (1013) une partie de données utiles à partir du premier paquets de données pour la traiter par le processeur (14).

15. Produit de programme informatique comprenant des parties de code logiciel configurées, lorsqu'elles sont exécutées dans une mémoire (16) d'une carte à puce intelligente (1A, 1B), pour exécuter les étapes du procédé selon l'une des revendications 9 à 14.
